# EUROPEAN PATENT SPECIFICATION

(11) **EP 0 612 821 B1**
(45) Date of publication and mention of the grant of the patent: **14.04.1999**
(21) Application number: 93301391.4
(22) Date of filing: 24.02.1993
(51) Int. Cl.: C09D 17/00, C09B 67/00

(54) **Carbon black dispersant**
Dispergiermittel für Russ
Dispersant pour noir de carbone

(43) Date of publication of application: 31.08.1994
(73) Proprietor: MERICHEM COMPANY, Houston, TX 77002-3068 (US)
(72) Inventor: Waters, John Albert, Houston, TX 77066 (US); Brient, James Allen, Missouri City, TX 77459 (US); Jensen, Earl Richmond, Pasadena, TX 77506 (US)
(74) Representative: Baillie, Iain Cameron

(56) References cited:
- EP-A- 0 052 224
- CH-A- 323 324
- CHEMICAL ABSTRACTS, vol. 85, no. 22, 29 November 1976, Columbus, OH (US); p. 106, AN 162031

## Description

### BACKGROUND OF THE INVENTION

The present invention relates to a method of dispersing carbon black in a way such that it is useful in water-borne and high-solids coatings compositions.

In the practice of manufacturing pigmented paints, a dispersion process is required during which pigments are deagglomerated or otherwise dispersed into a finely divided and smooth, pasty form. If proper dispersion is not affected, the resultant paints will be dull in gloss, rough, and their physical properties will be less than optimal, often failing to adhere to the substrate sought to be coated. Thus, the dispersion process is essential to good paint manufacturing practices.

Pigment dispersants are commonly used in the coatings industry to "wet" and "disperse" air or moisture from pigment particle surfaces to facilitate mechanical separation of the primary particles. They are also used to disperse the particles into the body of the liquid and to keep them from coagulating. The most common types of non-ionic wetting agents are polyalkoxy ethers, such as high molecular weight polyethylene oxide or its derivatives.

A conventional dispersion technique for high gloss systems is through the use of a ball mill. It is a batch process and has been widely used to disperse a wide variety of pigments, including titanium dioxide (TiO₂) and carbon black pigments. Grinding times vary from several hours to up to several days, depending upon the grinding technique, the nature of the pigment structures, the pigment particle sizes and the efficacy of the dispersant used. The dispersant is essential to good grinding in that it functions as a wetting agent for the pigment particles allowing them to be stabilized once they have become dedispersed by the physical grinding action. Carbon black, however, normally has a very small particle size, and thus, a high surface area per unit weight. Furthermore, it is difficult to wet due to its non-polar nature. Thus, carbon black is one of the, if not the, most difficult pigment to disperse. A wetting dispersant stabilizing carbon black dispersions and yet possessing low hydrophilicity has been long sought.

JP-A-50-078630 discloses the use of naphthenic acid as a dispersing agent for carbon black while EP-A-0 052224 discloses the use of mono and oligo ethylene glycol as for the same purpose. There is no disclosure regarding mechanisms by which these compounds act as dispersing agents in either of these references.

Carbon black pigments are made with small particle size to make them conductive. The small particles agglomerate easily and must be broken into individual particles by grinding and maintained as a pigment dispersant to coat, hide and result in an electrically conductive surface after coating. The pigment dispersant and carrier (paint) must be such that it does not fall in the volatile organic carbons (VOCs) category due to new environmental regulations. Indeed, a carbon black dispersion in aqueous medium is highly desirable to avoid any atmospheric contamination whatsoever. Moreover, the dispersant must not effect the conductivity of the carbon black particles and it must be a strong co-solvent by itself. The electrically conductive primer is required so that the top coating can be done by the electrospray technique which reduces paint waste by over 40% and significantly reduces automotive factory painters exposure to the coatings. Until this grinding development, making carbon black pigments readily dispersed in an aqueous medium, it was necessary that black automotive paint be oil based and, therefore, increasingly unacceptable and unsafe to the environment.

To this end, the discovery and invention described herein is for an extremely efficient and effective dispersant for carbon black pigments.

The present invention, therefore, provides a method for preparing a carbon black pigment suitable for use in a water-borne resin coating which comprises the steps of:
grinding carbon black in the presence of from 2% to 40% by weight, based upon the carbon black, of dispersing agent selected from ethylene glycol naphthenate, diethylene glycol naphthenate and triethylene glycol naphthenate.

The pigment dispersant of the invention, preferably triethylene glycol naphthenate is useful in water-borne and high-solids coating compositions. Preferably, triethylene glycol naphthenate is employed as a carbon black pigment dispersant useful in acrylic, vinyl, acrylic/epoxy, polyurethane, and alkyd/melamine resins for water-based paints. Triethylene glycol naphthenate produces a film with superior properties, including improved adhesion to the coated substrate, hardness, and gloss. Triethylene glycol naphthenate or other ethoxylated naphthenic acid esters have not been described previously as a pigment dispersant and grinding medium, and as noted above, give improved properties in films containing the dispersant.

The present invention also provides the method of preparing a carbon black pigment suitable for use in a water-borne resin coating which comprises the steps of grinding carbon black in the presence of from about 2% to about 40% by weight, based upon the carbon black, a dispersing agent selected from ethylene glycol naphthenate, diethylene glycol naphthenate and triethylene glycol naphthenate. The fineness of pigment grind is also improved by grinding with triethylene glycol naphthenate dispersant and produces physical properties comparable to qualities produced by the widely used commercial dispersant which have no water compatibility.

The pigment of this invention is recommended for use in water-borne and high-solids/low VOCs coatings formulations, particularly where high surface area and/or high oil absorption fillers or pigments are utilized.

The present invention thus provides a black water-based resin coating composition comprising carbon black dispersed by grinding in the presence of from about 2% to about 40% by weight, based upon the weight of the carbon black, of triethylene glycol naphthenate, water, and a water-based paint resin.

The present dispersant of the present invention gives significantly reduced grind time required for commercial black systems without deleteriously affecting the physical properties of the dry paint film. In fact, in most formulations the paint exhibited improved fluidity by the deagglomerization and stabilization of the carbon black pigment, and the dry film demonstrated improved gloss, color, and relative jetness. The grind time for carbon black is reduced below conventional dispersants and the amount needed for a successful grind is reduced.

The black pigments prepared in the practice of this invention are useful in water-borne, high-solids coating compositions such as paints, particularly for automotive use. Heretofore, black pigments have been dispersable only with great difficulty in the water-based paints. It is through the practice of this invention wherein the carbon black is ground in the presence of a dispersant selected from ethylene glycol naphthenate, diethylene glycol naphthenate and triethylene glycol naphthenate, particularly the most preferred triethylene glycol naphthenate.

When triethylene glycol naphthenate is used as the dispersant for the grinding of carbon black to form a paint pigment suitable for use in water-based coating compositions, the adhesion to the coated surface, hardness and gloss of the coating composition, i.e., paint, is improved and the environmental hazard of volatile organic solvents is avoided. Particularly, the carbon black pigment ground in the presence of the triethylene glycol naphthenate dispersant is useful in acrylic, vinyl, acrylic/epoxy, polyurethane and alkyd/melamine resins which are commonly used in the formation of coatings.

Naphthenic acids are well known in the art and are available commercially, primarily as the result of various extractive procedures carried out in refining naturally occurring petroleums and petroleum fractions, particularly gas-oil distillates boiling in the range of 204°-371°C (400-700°F) as described in U.S.-A-3,788,989 and 4,827,033. The chemical nature of these naphthenic acids is more or less ill-defined, but they all have in common the characteristic of possessing alicyclic nuclei. These may be five or six membered carbon atom ring systems, various condensed ring systems, and other related materials as disclosed in Fieser, Organic Chemistry, 3rd ed. 1956, and in Kirk-Othmer's Encyclopedia of Chemical Technology, Third Edition, Volume 15, John Wiley & Sons 1981.

The aforementioned naphthenates are normally prepared by reacting, following procedures well known to those skilled in the art, the glycol and naphthenic acid in equimolar amounts in the presence of catalysts in an inert, usually nitrogen, atmosphere. The techniques for reacting and recovering the naphthenate are known to those skilled practitioners of the chemical arts. Triethylene glycol naphthenate (Chemical Abstracts Service #132885-83-7) is the triethylene glycol monoester of naphthenic acid. The ethylene glycol naphthenate may be made either through the reaction of naphthenic acids with an ethylene glycol such as ethylene glycol, diethylene glycol, and particularly triethylene glycol using known esterification reaction conditions. Alternatively, the dispersing agents may be made by the reaction of the naphthenic acids with ethylene oxide such that the average number of ethoxy groups in the ethylene glycol naphthenate would range from 1 to about 3.

Triethylene glycol naphthenate is useful in dispersion of carbon black in acrylic, vinyl, acrylic/epoxy, polyurethane, and alkyd/melamine resins. Triethylene glycol naphthenate produces a film with superior properties, including improved adhesion to the coated substrate, hardness, and gloss. Fineness of pigment grind is also improved over control samples containing no triethylene glycol naphthenate dispersant. The grind of a pigment is determined by the well known Hegman Grind which, in the practice of this invention, may be as high as about 8.5 regularly varies in an amount of from about 5.5 to about 8.

In general, the carbon black is dispersed with water in a steel ball mill to which triethylene glycol naphthenate is added. After about one hour of milling time, this mill aqueous base is blended with a paint resin.

The carbon black materials used for the practice of this invention are those well known to be useful in the formulation of paint pigments, particularly carbon blacks having a surface area of from about 100 square meters per gram (m²\g) to about 600 (m²\g). The carbon black used in the practice of this invention to prepare the pigments of this invention are normally of such small particle size that they are conductive of electricity which is helpful in the application as a paint, particularly for automobiles. The conductive primer is required in the automobile manufacture so that top coating can be done by electrospray which avoids loss in paint and reduces the exposure of workers. The carbon black dispersed using the triethylene glycol ester of naphthenic acid has been found to provide a more conductive carbon black based paint.

In the grinding of the dispersant, the carbon black is mixed with water in an amount of from about 5% to about 15%, based upon the weight of the mixture with from about 2% to about 40% by weight, based upon the carbon black of the triethylene glycol naphthenate dispersing agent. Preferably, the dispersing agent is present in the amount of from about 6% to about 25% by weight. The grinding takes place for at least about 1/2 hour, preferably for a period of time of from about 1/2 to about 2 hours. Of course, more than the maximum time, or even greater times, can be used, but with little or no improvement. The grind time is significantly reduced where the triethylene glycol naphthenate is used. This reduced time represents high cost savings during production. In addition, the triethylene glycol naphthenate effectively wets the pigment without nullifying the dry film conductivity, a problem associated with most competitive products. The grinding of the dispersant with carbon black in the water normally takes place in a standard ball mill used for the grinding of carbon black pigments and would be accomplished at ambient temperatures and pressures, even though elevated temperatures and pressures may be used. The properties of the dispersed carbon black materials as pigments and coatings compare favorably with the most commonly used commercially available dispersing agents.

The foregoing description of the instant invention will be more particularly described by the following examples and covered by the attached claims.

### EXAMPLE 1

A "Quickee" steel ball mill was loaded with 300g of 3/16 inch steel balls to which was added 5g of carbon black and 60g of water. A predetermined amount (by weight) of triethylene glycol naphthenate was then added followed by shaking for 1 hour. After the 1 hour dispersion time in water, the mill base was blended with 100g AC-288 acrylic emulsion (from Rohm & Haas). Blending was performed by mixing the acrylic emulsion and the mill base for 10 minutes at 700 RPMs. After the blending period, the Hegman Grind xas determined to analyze for fineness of grind, and a 152,4 µm (6 mil) wet film draw down using well known procedures was prepared on aluminum panels. The films were air dried a minimum of 7 days after which determinations of adhesion, pencil hardness, and gloss were made using standard test procedures.

The following tables illustrate the improvement of adding triethylene glycol naphthenate as a carbon black dispersant on film properties, compared to a control using no dispersant.

| A. R880 Carbon Black (Cabot carp.) - 220 m²/g surface area | | | | | | |
|---|---|---|---|---|---|---|
| **SAMPLE** | **HEGNAN GRIND** | **ADHESION** | **PENCIL HARDNESS** | **GLOSS** | | |
| | | | | **20°** | **60°** | **85°** |
| Control (no dispersant) | 6 | 3 | F | 46.3 | 73.2 | 84.6 |
| | | | | | | |
| 20% TEG naphthenate | 6.5 | 5 | 2H | 57.5 | 79.8 | 98.1 |
| | | | | | | |

| B. Black Pearl 1300 (Cabot Corp.) - 560 m²/g surface area | | | | | | |
|---|---|---|---|---|---|---|
| Control (no dispersant) | 6 | 5 | F | 47.2 | 77.0 | 95.8 |
| | | | | | | |
| 10% TEG naphthenate | 7 | 5 | F | 56.6 | 83.0 | 98.3 |

### EXAMPLE 2

Following the procedure described in Example 1, the acrylic emulsion/carbon black dispersion was applied to polymeric substratee. Substrates studied included a modified polyphenylene oxide/nylon (General Electric "Noryl GTX910-1500"), hereinafter referred to as "PTX", and a polyester/polycarbonate (General Electric, "Xenoy 1102-7017"), hereinafter referred to as "Xenoy."

The following tables illustrate the improvement in gloss and reduction of contact angle (indicative of improved wetting of the substrate) when triethylene glycol was used to disperse the carbon black compared to a control using no dispersant.

| A. PTX Panels - Cabot Black Pearl 1300 carbon black | | | | |
|---|---|---|---|---|
| **SAMPLE** | **GLOSS** | | | **CONTACT ANGLE** |
| | **20°** | **60°** | **85°** | |
| Control (no dispersant) | 21.3 | 57.4 | 93.0 | 80 |
| | | | | |
| 10% TEG Naphthenate | 58.5 | 80.0 | 97.2 | 66 |
| | | | | |

| B. Xenoy Panels - Cabot Black Pearl 1300 carbon black | | | | |
|---|---|---|---|---|
| **SAMPLE** | **GLOSS** | | | **CONTACT ANGLE** |
| | **20°** | **60°** | **85°** | |
| Control (no dispersant) | 28.3 | 61.5 | 94.5 | 76 |
| | | | | |
| 10% TEG Naphthenate | 55.4 | 78.4 | 95.0 | 76 |

## Claims

1. The method for preparing a carbon black pigment suitable for use in a water-borne resin coating which comprises the steps of:
grinding carbon black in the presence of from 2% to 40% by weight, based upon the carbon black, of dispersing agent selected from ethylene glycol naphthenate, diethylene glycol naphthenate and triethylene glycol naphthenate.

2. A black water-based resin coating composition comprising:
carbon black dispersed by grinding in the presence of from 2% to 40% by weight, based upon the weight of the carbon black, of triethylene glycol naphthenate, water and a water-borne paint resin.

3. The coating composition of claim 2, wherein the water-borne paint resin is an acrylic, vinyl, acrylic/epoxy, polyurethane or alkyd/melamine resin.

## Patentansprüche

1. Verfahren zur Herstellung eines Rußpigments, das geeignet ist zur Verwendung in einer wasserverdünnbaren Harzbeschichtung, umfassend die folgenden Schritte:
Mahlen von Ruß in Gegenwart von 2 bis 40 Gew.-%, bezogen auf den Ruß, eines Dispergiermittels, das ausgewählt ist aus Ethylenglycolnaphthenat, Diethylenglycolnaphthenat und Triethylenglycolnaphthenat.

2. zusammensetzung für eine schwarze wasserverdünnbare Harzbeschichtung, umfassend:
Ruß, der dispergiert wird, indem man ihn mahlt in Gegenwart von 2 bis 40 Gew.-%, bezogen auf das Gewicht des Rußes, von Triethylenglycolnaphthenat, Wasser und einem wasserverdünnbaren Lackharz.

3. Beschichtungszusammensetzung nach Anspruch 2, bei der das wasserverdünnbare Lackharz ein Acryl-, Vinyl-, Acryl/Epoxid-, Polyurethan- oder Alkyd/Melaminharz ist.

## Revendications

1. Méthode de préparation d'un pigment à base de noir de carbone approprié à une utilisation dans un revêtement de résine à l'eau comprenant les étapes :
de broyage d'un noir de carbone en présence de 2 % à 40 % en masse, par rapport au noir de carbone, d'un agent dispersant choisi parmi un naphténate d'éthylèneglycol, un naphténate de diéthylèneglycol et un naphténate de triéthylèneglycol.

2. Composition noire de revêtement de résine à l'eau comprenant :
du noir de carbone dispersé par broyage en présence de 2 % à 40 % en masse, par rapport à la masse du noir de carbone, de naphténate de triéthylèneglycol, de l'eau et une résine de peinture à l'eau.

3. Composition de revêtement selon la revendication 2, dans laquelle la résine de peinture à l'eau est une résine acrylique, vinylique, acrylique/époxy, polyuréthanne ou alkyde/mélamine.
